# EUROPEAN PATENT APPLICATION

(11) **EP 4 170 611 A1**
(43) Date of publication of application: **26.04.2023**
(21) Application number: 21846401.4
(22) Date of filing: 21.06.2021
(51) Int. Cl.: G07C 5/08, G07C 5/00, G07C 5/02, B62D 41/00

(54) **METHOD AND SYSTEM FOR COLLECTING AND MANAGING VEHICLE-GENERATED DATA**

(30) Priority: 21.07.2020 KR 20200090449; 10.05.2021 KR 20210060237
(71) Applicant: HYUNDAI MOTOR COMPANY, Seoul 06797 (KR); Kia Corporation, Seocho-gu Seoul 06797 (KR)
(72) Inventor: PARK, Seung Wook, Yongin-si Gyeonggi-do 16803 (KR); LIM, Wha Pyeong, Hwaseong-si Gyeonggi-do 18271 (KR)
(74) Representative: Isarpatent
(86) International application number: PCT/KR2021/007730
(87) International publication number: WO 2022/019489

(57) **Abstract**

A data recording system of a vehicle comprises: a first data recorder for recording a plurality of pieces of interaction data indicating time-stamped interactions generated between a driver and an autonomous driving system of the vehicle during driving; and a second data recorder for recording event data indicating a vehicle state during a predetermined period of time before and after occurrence of a pre-defined event. The data recording system of the vehicle is configured to upload the plurality of pieces of interaction data to a remote server according to a pre-defined schedule, while uploading, in response to occurrence of an event, main interaction data that is at least one piece of interaction data recorded in proximity to an occurrence time point of the event, to the remote server together with the event data or subsequent to the event data.

## Description

### TECHNICAL FIELD

The present disclosure relates to collecting and managing data generated by vehicles.

### BACKGROUND

The statements in this section merely provide background information related to the present disclosure and do not necessarily constitute prior art.

An event data recorder (EDR) is configured to detect an accident or such event and store information about a driving state of a vehicle or an operation by a driver within a predetermined time before and after the event. At least several parameters, including speed, seat belt status, and airbag deployment status, are stored for reconstruction during forensic investigations.

Forensic investigation is generally performed using a vehicle diagnostic link connector, e.g., an on-board diagnostics (OBD)-II port or by physically extracting an EDR data memory and reading data therefrom. Data in the EDR is susceptible to damage or alteration due to faulty reading technology and may be maliciously manipulated or deleted after storing, which exhibits the difficulty of ensuring complete data integrity for the stored data.

As the application of ADAS (Advanced Driver Assistance Systems) or autonomous driving functions expands, identifying who was controlling a vehicle between an autonomous driving system and a driver at a time point of an accident may be useful for proper investigation of the cause of the accident.

### SUMMARY

### [Technical Problem]

With the development of information and communication technology, such vehicle data may be collected in various forms by a data server on a network and provided to various service providers. This disclosure presents a general concept of a data recording system of a vehicle having a communication function and a cloud storage system that collects and manages vehicle-generated data. The concept focuses on overcoming the limitations of in-vehicle data storage and maximizing user access to vehicle-generated data.

This disclosure, in particularly, presents techniques for transmitting (or uploading) interaction data and event data, in a vehicle system including a first data recorder that records a plurality of interaction data indicating timestamped interactions that occur between an autonomous driving system of a vehicle and a driver while driving, and a second data recorder that records event data indicating the state of the vehicle for a predetermined time before and after the event such as a crash accident occurs.

### [Technical Solution]

A data recording system of a vehicle according to an aspect of the present disclosure includes a telecommunication device configured to enable communication between the vehicle and a remote server, a first data recorder configured to record a plurality of interaction data indicating timestamped interactions that occur between an autonomous driving system of the vehicle and a driver while driving, and a second data recorder configured to record event data indicating a state of the vehicle for a predetermined time before and after a predefined event occurs. The telecommunication device may be further configured to upload the plurality of interaction data to the remote server according to a predefined schedule, and in response to an occurrence of the event, upload main interaction data that is at least one interaction data recorded in proximity to an occurrence time point of the event to the remote server together with the event data or subsequent to the event data.

According to an aspect of the present disclosure, there is provided a method performed by a data recording system of a vehicle including a first data recorder and a second data recorder. The method includes: recording, by the first data recorder, a plurality of interaction data indicating timestamped interactions that occur between an autonomous driving system of the vehicle and a driver while driving; and uploading the plurality of interaction data to a remote server according to a predefined schedule. In addition, the method includes: recording, by the second data recorder, event data indicating a vehicle state for a predetermined time before and after a predefined event occurs, in response to an occurrence of the predefined event; identifying main interaction data that is at least one interaction data recorded in proximity to an occurrence time point of the event; and uploading the main interaction data to the remote server together with the event data or subsequent to the event data.

Embodiments of the data recording system and method may further include one or more of the following features.

In some embodiments, the main interaction data may be used to identify a subject that was controlling the vehicle at the time the event occurred.

In some embodiments, each of the plurality of interaction data may be timestamped data indicating a type of interaction.

In some embodiments, the type of interaction may include changing a state of the autonomous driving system, starting and ending Minimal Risk Maneuver (MRM) by the autonomous driving system, and taking over control of a driving task to a driver. In addition, in some embodiments, the type of interaction may further include an occurrence of an event that triggers recording of the first data recorder and an occurrence of a minor event that does not trigger recording of the first data recorder.

In some embodiments, the plurality of interaction data may be expressed in a data format including a type field in which a type flag indicating a type of interaction is defined, a cause field in which data indicating a cause of the interaction is defined, a date field in which data indicating a date when the interaction occurred is defined, and a timestamp field in which data indicating a time when the interaction occurred is defined.

### [Advantageous Effects]

According to the technologies of the present disclosure, an autonomous vehicle can upload recorded interaction data in proximity to an occurrence time point of an event, such as a crash accident, to a cloud storage system 20 as successfully as possible without imposing an excessive burden on V2X communication of the autonomous vehicle. During normal driving where no event occurs, the upload task of interaction data can be scheduled so as not to affect or reduce V2X communication resources for autonomous driving.

### BRIEF DESCRIPTION OF THE DRAWINGS

FIG. 1 is a schematic diagram of a centralized system for collecting and managing event data from vehicles according to an embodiment of the present disclosure.
FIG. 2 is a conceptual diagram showing a difference between event data and interaction data capable of being recorded in a vehicle.
FIG. 3 shows an exemplary data format representing interaction data according to an embodiment of the present disclosure.
FIG. 4 is a flowchart showing a method of recording and uploading vehicle-generated data by a vehicle system according to an embodiment of the present disclosure.

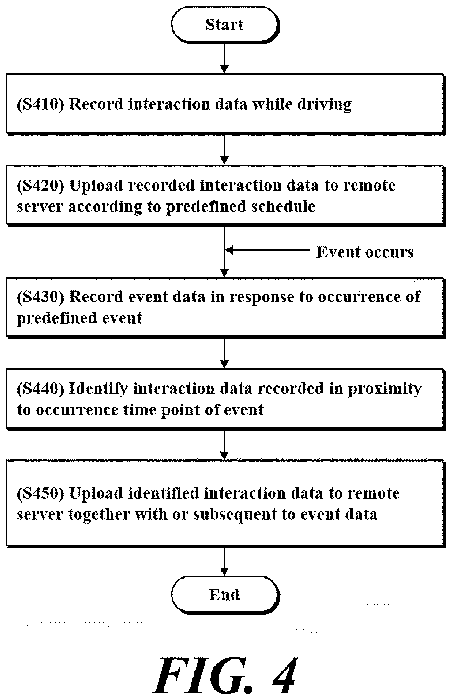

FIG. 4 shows an example of a de-identified version of a vehicle identification number (VIN) and EDR identified thereby according to an embodiment of the present disclosure.

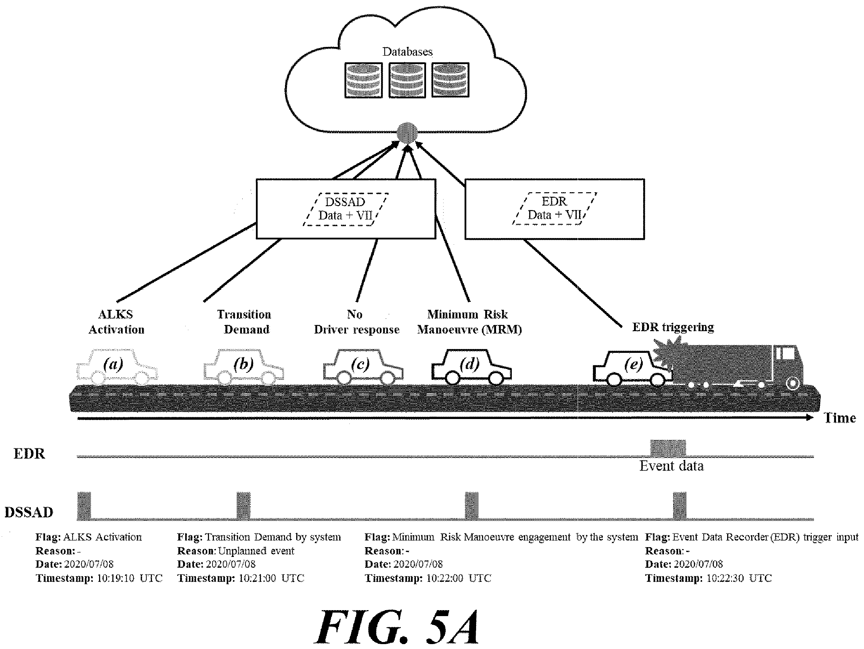

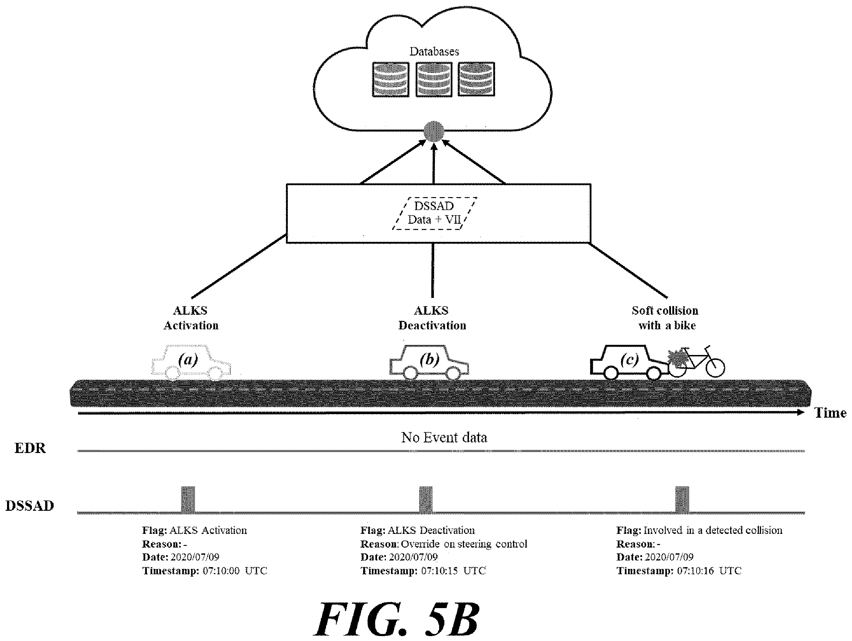

FIGS. 5A and 5B illustrate exemplary scenarios that may occur while a vehicle is driven down a road and vehicle-generated data being uploaded from the vehicle to a cloud storage system.

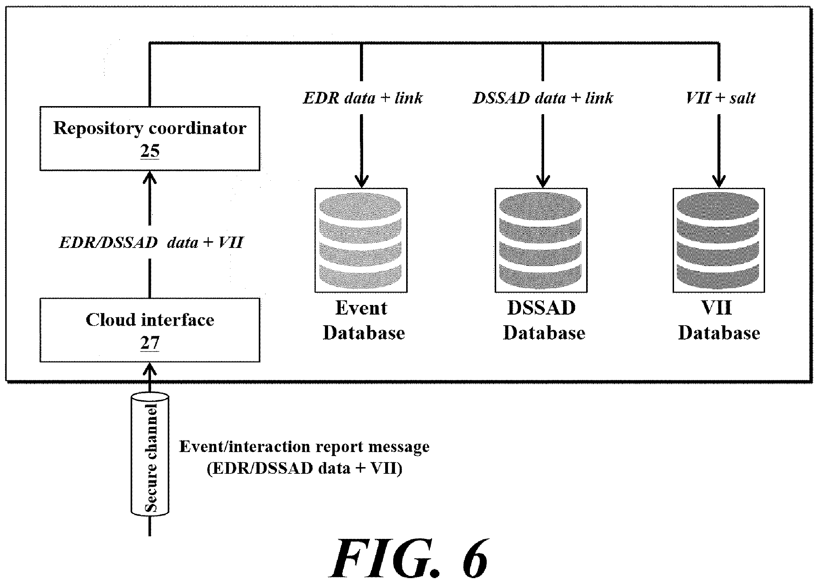

FIG. 6 is a conceptual diagram showing an exemplary method of separately storing vehicle identification information (VII), EDR data, and DSSAD data in databases according to an embodiment of the present disclosure.

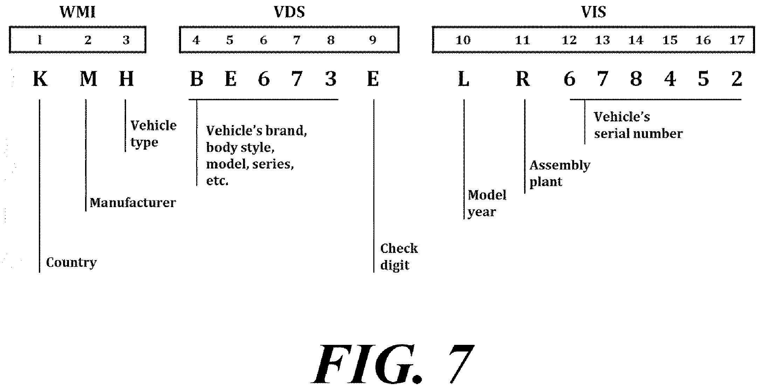

FIG. 7 is a diagram for explaining details of a vehicle identification number (VIN).

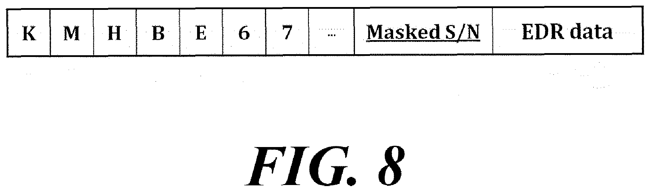

FIG. 8 shows an example of a de-identified version of a vehicle identification number (VIN) and EDR identified thereby according to an embodiment of the present disclosure.

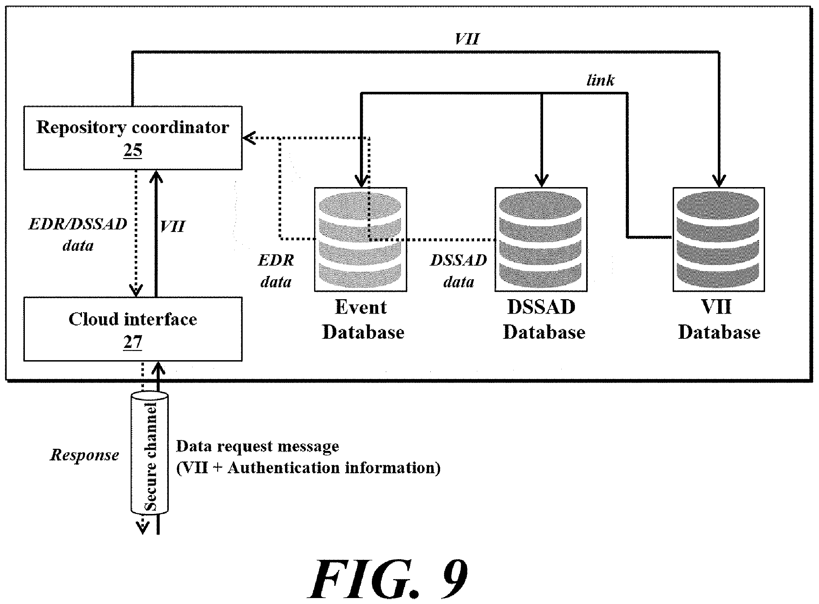

FIG. 9 is a conceptual diagram showing an exemplary method for a cloud storage system to query and provide EDR/DSSAD data for a specific vehicle according to an embodiment of the present disclosure.

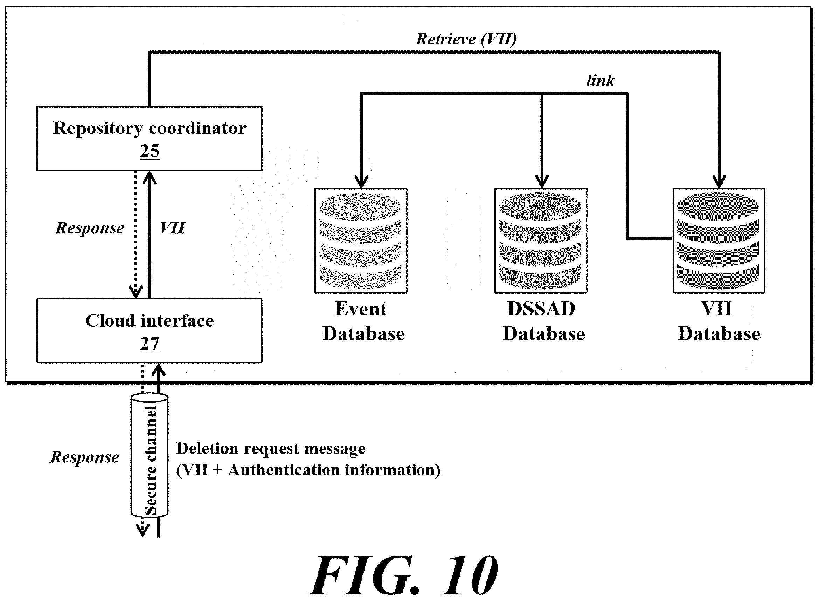

FIG. 10 is a conceptual diagram showing an exemplary method of deleting VII/EDR/DSSAD data per request of a vehicle owner by a cloud storage system according to an embodiment of the present disclosure.

### DETAILED DESCRIPTION

Hereinafter, some embodiments of the present disclosure will be described in detail with reference to the accompanying drawings. In the following description, like reference numerals designate like elements, although the elements are shown in different drawings. Further, in the following description of some embodiments, a detailed description of known functions and configurations incorporated therein will be omitted for the purpose of clarity and for brevity.

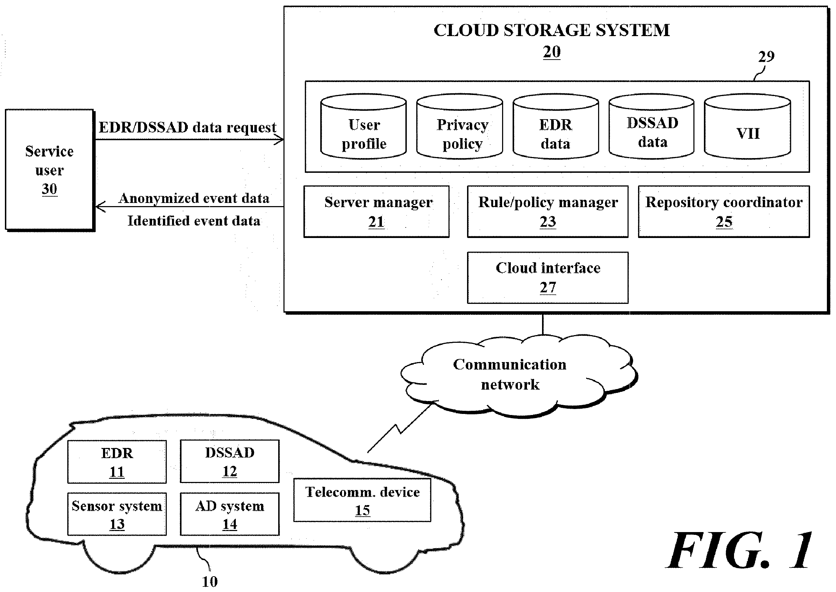

FIG. 1 is a conceptual diagram illustrating an example of a centralized system for collecting and managing vehicle-generated data from vehicles, according to one embodiment of the present disclosure.

A system 100 includes an in-vehicle data recording system 10 provided in a vehicle, and a cloud storage system 20 implemented as server(s) on a network. The server(s) implementing the cloud storage system 20 may be server(s) operated by a vehicle manufacturer or server(s) operated by an operator who is independent of the vehicle manufacturers, or may include a combination thereof.

A vehicle is configured to operate fully or partially in an autonomous driving mode and may therefore be referred to as an "autonomous driving vehicle." For example, an autonomous driving system 14 may receive information from a sensor system 13 and execute, in an automated manner, one or more control processes based on the received information (for example, setting steering to avoid detected obstacles).

A vehicle may be fully autonomous or partially autonomous. In a partially autonomous vehicle, some functions may be temporarily or continuously controlled manually by a driver. Further, the fully autonomous vehicle may be configured to be switchable between a fully manual operating mode and a partially autonomous operating and/or fully autonomous operating mode.

The in-vehicle data recording system 10 may be configured to generate, record, or store various types of data related to vehicle operation or driver behavior. The in-vehicle data recording system 10 includes two types of data recorders: an Event Data Recorder (EDR) 11 and a Data Storage System for Automated Driving Vehicles (DSSAD) 12. They record vehicle-generated data for different purposes.

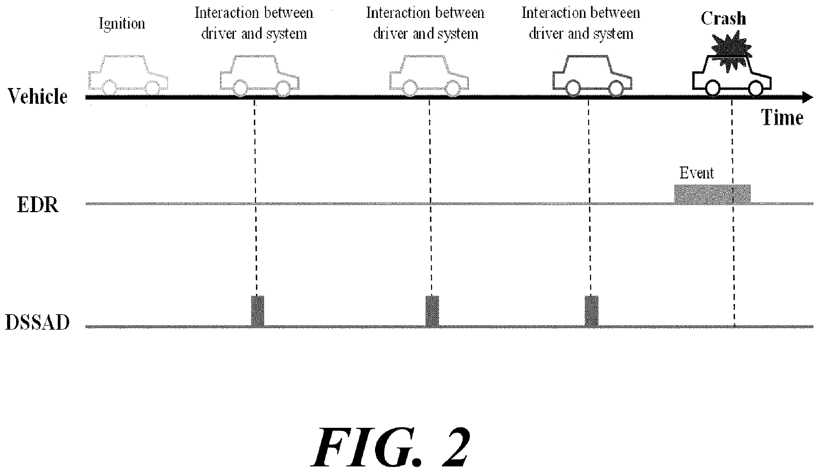

The purpose of the EDR 11 is to store vehicle information for specific events such as a crash accident or an airbag deployment. Data from the EDR 11 is used for collision analysis and reconstruction. The purpose of the DSSAD 12 is to record all predefined interactions between a driver and an autonomous driving system. As illustrated in Figure 2, EDR 11 records or stores relevant data when an event such as the crash accident occurs, whereas DSSAD 12 records or stores interactions between vehicle and driver while driving. Data from the DSSAD 12, typically stored in timestamp format, is used to identify a subject who was controlling a vehicle (either the driver or the autonomous driving system) at a particular time point. The data of the EDR 11 and the data of the DSSAD 12 are used complementary to each other in forensic investigations, and in particular, the data of the DSSAD 12 is useful for identifying a subject who was controlling the vehicle at the time of collision.

The EDR 11 may be configured to receive data from various sensors and/or electronic control units (ECUs) mounted on the vehicle. The EDR 11 has a volatile memory of the EDR 11 that has data for a certain period temporarily stored while being continuously updated. The EDR 11 may be responsive to a detection of the occurrence of one or more predefined events for recording, into an internal non-volatile memory, the data that was stored in the volatile memory within a predetermined time before and after the detection. Such an event may in particular be a traffic collision. A traffic collision may be detected, for example, by the triggering deployment of an irreversible safety device such as an airbag or seat belt preloading device. A traffic collision may also be detected at the occurrence of acceleration/deceleration exceeding a predefined threshold (e.g., a speed change of 8 km/h or higher within about 150 ms). The predefined event(s) may further include a malfunction of the main function of the vehicle.

The EDR 11 may be configured to receive trigger signal(s) informing of the occurrence of an event from the electronic control unit(s), such as, for example, an airbag control unit (ACU). The EDR 11 may be accessible to values measured by at least one or more sensors 13. At least one sensor 13 may be configured to detect vehicle speed/acceleration/deceleration/travel distance/geographical position, and the like. The EDR 11 may be included as a functional module in the airbag control unit (ACU).

The data recorded by the EDR 11 may be data suitable for analyzing traffic collisions, such as, for example, data of vehicle dynamics, a driver's behavior, and an operating state of a vehicle safety system. The EDR 11 may be configured to transmit recorded data (hereinafter referred to as "EDR data" or "event data") to a telecommunication device 15 so as to be transmitted to the cloud storage system 20. In an exemplary embodiment, the EDR 11 may be configured to be provided to the telecommunication device 15 immediately after storage of EDR data, such that related EDR data may be transmitted to the cloud storage system 20 without delay after an event has occurred.

The autonomous driving system 14 may be configured to generate interaction signals indicative of interactions between a driver and the autonomous driving system 14. These interaction signals may include a signal indicating whether one or more autonomous driving functions are currently active. For example, the autonomous driving system 14 may generate a signal indicating whether a specific feature such as an adaptive cruise control (ACC) function or an automated lane keeping system (ALKS) is currently active. As another example, the autonomous driving system 14 may generate a signal indicating whether driving of a vehicle is currently being controlled fully automatically rather than manually. In addition, these interaction signals may further include signals indicating a transition demand indicating that control of the driving task to a driver needs to be taken over, and signals indicating that control of the driving task to the driver has been taken over. The autonomous driving system 14 may provide interaction signals to the DSSAD 12 via a data bus (for example, CAN bus, Ethernet bus, etc.).

The DSSAD 12 may store interaction data representing interaction between a driver and the autonomous driving system in an internal non-volatile memory based on the interaction signals received from the autonomous driving system 14. The DSSAD 12 is installed on a vehicle equipped with a highly-automated driving system (for example, SAE level 3, 4, 5 classification), and is a data storage system that aims to clarify "subjects requested to drive" and "subjects who actually drove." During the transition procedure (that is, after the transition demand is issued and until a driver actually takes over control), the "subject requested to drive" and the "subject who actually drove" may be different from each other.

Interaction data (hereinafter, may also be referred to as "DSSAD data") may include time-stamped data elements representing specific interactions, such as, for example, changing the state (switched off, activated, transition demand, override) of the autonomous driving system, starting and ending Minimal Risk Maneuver (MRM) by the autonomous driving system, and taking over control of a driving task to a driver. In some embodiments, the interactions may further include an occurrence of an event that triggers recording of the EDR 11 and an occurrence of a minor event that does not trigger recording of the EDR 11.

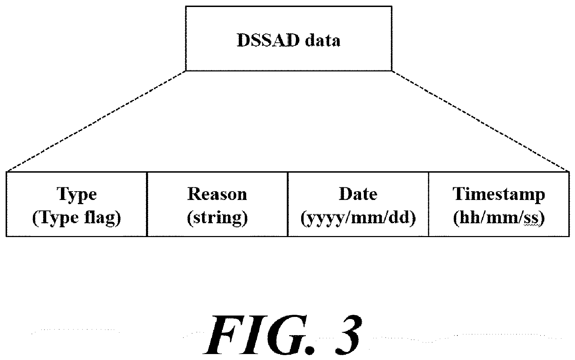

As illustrated in FIG. 3, interaction data may have four fields including a type field, a cause field, a date field, and a timestamp field. The type field is a field in which a type flag indicating a type of interaction between a driver and a system, such as a transition demand or a minimal risk maneuver, is defined. The cause field is a field in which data indicating a cause of occurrence of an interaction specified in the type field is defined. The cause field may be an optional field. In the date field, data indicating a date when an interaction specified in the type field occurred is defined, for example, in year/month/day format. In the timestamp field, data indicating a time at which an interaction specified in the type field occurred is defined, for example, in an hour/minute/second format.

The DSSAD 12 may provide the stored interaction data to the telecommunication device 15 (in accordance with a predefined schedule or in response to a request of the telecommunication device 15) so as to be transmitted to the cloud storage system 20.

In some other embodiments, the interaction data may be periodically uploaded to the cloud storage system 20. For example, the DSSAD 12 may be scheduled to perform an upload procedure of the interaction data every 6 hours or 12 hours, or every day or every week. When ignition of a vehicle enters an ON state, the DSSAD 12 may determine whether an upload period has elapsed from a time point of the last upload. When it is determined that the upload period has elapsed, the DSSAD 12 may initiate an upload procedure. In some other embodiments, the DSSAD 12 may be configured to initiate an upload procedure for transmitting interaction data to the cloud storage system 20 whenever the ignition of the vehicle enters an ON state. In yet some other embodiments, when the percentage of empty storage space in the internal storage of the DSSAD 12 reaches a threshold value, the DSSAD 12 may be configured to perform an upload procedure for transmitting the interaction data to the cloud storage system 20. As such, unlike event data (i.e., EDR data), interaction data accumulated over a considerable period of time is uploaded instead of being uploaded to the cloud storage system 20 whenever an interaction occurs.

The telecommunication device 15 may be a wired or wireless telecommunication device that connects the vehicle's internal network to an external communication network. The telecommunication device 15 may be, for example, a telematics unit (TMU), or a wired/wireless dongle plugged into an OBD-II port. The telecommunication device 15 may include, for example, a wireless transceiver capable of cellular communication such as GSM/WCDMA/LTE/5G or wireless short-range communication such as WLAN, c-V2X, WAVE, DSRC and Bluetooth.

The telecommunication device 15 may generate an interaction report message when DSSAD data is received from DSSAD 12. The telecommunication device 15 may transmit the interaction report message to the cloud storage system 20 via the communication network. The interaction report message may include the vehicle identification information (VII) and the DSSAD data received from the DSSAD 12.

The telecommunication device 15 may be configured to generate an event report message when EDR data is received from the EDR 11. The telecommunication device 15 may be configured to transmit the event report message to the cloud storage system 20 via the communication network. The event report message may include vehicle identification information (VII) and EDR data received from the EDR 11.

In a typical embodiment, the VII may be a vehicle identification number (VIN), which is a 17-digit unique identifier composed of numbers and letters assigned to individual vehicles by vehicle manufacturers. Alternatively, the VII may be a vehicle registration number (or license plate information), a unique identifier used by the telecommunication device 15 for communication, a (long-term or short-term) certificate assigned to a vehicle for V2X communication, and the like. The report message may further include a geographic location where an event or interaction occurred.

As described above, a vehicle uploads related event data (EDR data) without delay after an event occurs, and on the other hand, the vehicle uploads interaction data accumulated over a certain period of time according to a predefined schedule instead of uploading related interaction data (DSSAD data) whenever an interaction occurs. In other words, whenever an interaction occurs, corresponding interaction data (DSSAD data) is not uploaded to the cloud storage system 20 without delay.

In this upload method, the time point at which interaction data useful for identifying a subject who was controlling the vehicle at the time of an event such as a crash accident occurred may be uploaded after a considerable amount of time has elapsed since the event occurred, and at that time point, it may be impossible for the vehicle to attempt to upload the interaction data (i.e., DSSAD data) (for example, due to vehicle fire, flooding, junk car, etc.).

Uploading interaction data more frequently may be one solution, but frequent occupation of communication links by upload tasks may not be suitable for autonomous vehicles that continuously require V2X communication with other vehicles or infrastructure.

Accordingly, a way of uploading the interaction data recorded in proximity to an occurrence time point of a crash accident to the cloud storage system 20 as successfully as possible without imposing an excessive burden on the V2X communication of an autonomous vehicle is required.

According to a preferred embodiment of the present disclosure, when EDR data is received from the EDR 11 (or in response to the occurrence of an event triggering the recording of the EDR 11), the telecommunication device 15 may acquire at least one interaction data (hereinafter referred to as "main interaction data") recorded in proximate to an occurrence time point of the event. For example, the telecommunication device 15 may request delivery of the main interaction data to the DSSAD 12. The telecommunication device 15 may then transmit the main interaction data to the cloud storage system 20 along together with or subsequent to transmission of the EDR data. Herein, the main interaction data may be recent interaction data recorded for a certain period of time before an event occurs, or may alternatively be a predefined number of recent interaction data recorded before an event occurs.

The cloud storage system 20 is a data management system, implemented with servers on a network, that collects and manages EDR data and DSSAD data from a plurality of vehicles.

The cloud storage system 20 may receive an event report message and an interaction report message from a plurality of vehicles. For report messages received from the vehicle, the cloud storage system 20 separates the VII from the EDR/DSSAD data that enables a third party to identify or track the related vehicle or the related individual, so that the VII and the EDR/DSSAD data may be stored in different databases, respectively.

As will be described later with reference to FIG. 6, the EDR/DSSAD data recorded in each vehicle is stored and managed in databases on the network along with link data, separated from vehicle identification information (VII), which allows a third party to identify or track the related vehicle. Link data may be cryptographically (re)generated based on the vehicle identification information and salt stored in a VII database. Accordingly, by deleting the vehicle identification information or salt from the VII database, the association between the vehicle identification information and related EDR/DSSAD data may be removed.

The cloud storage system 20, in response to a request of a user who wants to use the EDR/DSSAD data, may provide anonymized EDR/DSSAD data in which a specific vehicle or individual is not identified, or provide EDR/DSSAD data in which a specific vehicle or individual is identified. The user may be a vehicle owner, a driver, an insurance company, a government agency, a researcher, or a vehicle manufacturer who want to utilize EDR/DSSAD data. For EDR/DSSAD data in which a specific vehicle or individual has been identified, unless otherwise authorized by a court order, search warrant, and/or other applicable laws and regulations, the cloud storage system 20 needs to be provided only to investigators or other users authorized by the relevant vehicle owner.

This centralized system that collects and manages EDR/DSSAD (data storage system for automated driving vehicles) data from vehicles may free vehicle data recorders from storage space constraints. For example, an event data recorder may be designed to collect EDR data related to a previously ignored minor incident using more trigger conditions than conventionally, and may be designed to collect a wider variety of data elements (for example, radar/lidar data obtained before and after an event, V2X messages, etc.) that may further facilitate ex-post analysis of an event.

Individuals or institutions may easily obtain EDR/DSSAD data of interest in a timely manner from a centralized system. In addition, EDR/DSSAD data stored in storage on a trusted network may be useful for forensic investigations that require ensuring the integrity of the data. EDR data and DSSAD data are complementary. In particular, DSSAD data is useful for identifying a subject who was controlling the vehicle at the time of collision.

The cloud storage system 20 may be implemented to include a service manager 21, a rule/policy manager 23, a repository coordinator 25, a cloud interface 27, and a data repository 29. The data repository 29 may be implemented by at least one data server.

The service manager 21 is a functional entity, which collects and manages EDR/DSSAD data from vehicles and provides a user with anonymized EDR/DSSAD data in which a specific vehicle or individual is not identified or EDR/DSSAD data in which a specific vehicle or individual is identified. The rule/policy manager 23 is a functional entity for managing user profiles and privacy policy stored in the data repository 29. The repository coordinator 25 is a functional entity for separately storing the EDR data, the DSSAD data and the VII data in the databases of the data repository 29, and retrieving the EDR data, the DSSAD data and the VII data from the databases of the data repository 29. The cloud interface 27 is a functional entity that serves as a gateway of the cloud storage system 20.

The data repository 29 has databases that record user profiles, privacy policy, VII data, EDR data, and DSSAD data. The user profile includes subscription information of individuals, companies, or organizations that have subscribed to the cloud storage system 20. The privacy policy includes a set of privacy rules that apply to the collection and management procedures of each vehicle's EDR/DSSAD data.

The rule/policy manager 23 may be configured to receive, from a vehicle owner, settings for privacy options for personal data (VII/EDR/DSSAD data) collected from the owner's vehicle, and generate a set of privacy rules (that is privacy policies) to be applied to the collection, management, and use of personal data according to the received settings for privacy options.

Referring now to FIG. 4, a method of recording and uploading vehicle-generated data by a vehicle system, which may be the in-vehicle data recording system 10 illustrated in FIG. 1, will be described.

The vehicle system may include a first data recorder and a second data recorder. The first data recorder may be a Data Storage System for Automated Driving Vehicles (DSSAD), and the second data recorder may be an Event Data Recorder (EDR).

The vehicle system records a plurality of interaction data indicating timestamped interactions that occur between an autonomous driving system of the vehicle and a driver while driving using the first data recorder (S410). The vehicle system uploads the plurality of interaction data to the remote server according to a predefined schedule (S420).

The interaction data may be timestamped data indicating a type of interaction. The type of interaction may include changing a state of the autonomous driving system, starting and ending Minimal Risk Maneuver (MRM) by the autonomous driving system, and taking over control of a driving task to a driver.

The interaction data may be expressed in a predefined data format including a type field in which a type flag indicating a type of interaction is defined, a cause field in which data indicating a cause of the interaction is defined, a date field in which data indicating a date when the interaction occurred is defined, and a timestamp field in which data indicating a time when the interaction occurred is defined.

The type of interaction may further include an occurrence of an event that triggers recording of the second data recorder and an occurrence of a minor event that does not trigger recording of the second data recorder. Accordingly, the specific interaction data may have a type field in which data indicating an occurrence or an occurrence type of an event triggering or not triggering recording of the second data recorder is defined.

The vehicle system records event data indicating a vehicle state for a predetermined time before and after an event occurs using the second data recorder, in response an occurrence of the predefined event (S430). In addition, the vehicle system identifies "main interaction data" that is at least one interaction data recorded in proximity to an occurrence time point of the event (S440), and uploads the identified main interaction data to the remote server together with the event data or subsequent to the event data (S450). In a forensic investigation, the main interaction data may be used to identify a subject who was controlling the vehicle at the time the event occurred.

FIGS. 5A and 5B illustrate vehicle-generated data being uploaded to the cloud storage system 20 in an exemplary scenario that may occur while a vehicle equipped with an Automatic Lane Keeping System (ALKS) is driven down a road.

The Automatic Lane Keeping System (ALKS) is a function similar to smart cruise control, which controls the lateral and longitudinal movement of a vehicle on a highway or similar road environment to keep the vehicle is driven in its lane without driver intervention. In other words, a driver no longer needs to hold a steering wheel or pay attention while ALKS is operating. However, when circumstances require ALKS to make a transition demand, action needs to be taken to ensure that the driver regains control within a set time frame. Accordingly, for safe control transition, the ALKS needs to monitor the behavior of the driver.

In the scenario illustrated in FIG. 5A, an event triggering the recording of the EDR 11 (in other words, a crash accident) occurred at time point (e). The vehicle uploaded DSSAD data about interactions between ALKS and the driver, which occurred during driving, to the cloud storage system 20 from (a) when the ALKS was activated. In addition, the vehicle uploaded the EDR data for the event that occurred at time point (e) to the cloud storage system 20. An analysis based on the DSSAD data and EDR data shows the following.

Because the driver activated ALKS at 10:19:10, ALKS took over control of the vehicle. After 1 minute and 50 seconds, the weather had deteriorated so much that the ALKS asked the driver to transfer control of the vehicle, but the driver did not respond. The ALKS automatically initiated MRM at 10:22:00. And the collision occurred at 10:22:30.

As such, the situation at the time of the accident may be checked through EDR/DSSAD data analysis. In particular, the cloud-based data recorder system delivers EDR/DSSAD data to the cloud storage system 20 according to a predefined data transmission policy, thus reducing the conventional effort for physical access to the vehicle and information collection after an accident.

In the scenario illustrated in FIG. 5B, a minor crash accident with a bicycle occurred at time point (c) that did not reach an extent of triggering the recording of the EDR 11. The vehicle uploaded DSSAD data about interactions between ALKS and the driver, which occurred during driving, to the cloud storage system 20 from (a) when ALKS was activated. Analysis based on the DSSAD data makes it possible to reconfigure the time-series situation as follows.

ALKS was activated by the driver at 07:10:00. After 15 seconds, ALKS was deactivated due to the occurrence of an override in which the driver directly manipulated the steering. A collision between a vehicle and a bicycle occurred at 07:10:16.

In this scenario, the impact of the collision on the vehicle was negligible so the EDR trigger condition was not met and therefore no related EDR data was collected. Nevertheless, since the DSSAD data is uploaded to the cloud storage system 20, the detailed accident situation may be easily simulated and analyzed.

Referring to FIG. 6, an exemplary method in which the cloud storage system 20 separately stores the VII, the EDR data, and the DSSAD data, which are included in report messages received from a vehicle in databases, is described.

The cloud interface 27 may receive an event report message or an interaction report message from a vehicle through a security channel. Each report message may include the EDR data and the VII or may include the DSSAD data and the VII.

The repository coordinator 25 may generate link data for maintaining an association between the EDR/DSSAD data and the VII, which would be stored in different databases. The link data may be generated based at least in part on the VII and a randomly generated value (hereinafter referred to as "salt"). However, the link data itself does not include any meaningful information that identifies a vehicle or individual.

The repository coordinator 25 may divide the information included in each report message into two data sets. A first data set includes EDR/DSSAD data but does not include the VII, and a second data set includes the VII but does not include EDR/DSSAD data. In other words, a vehicle identification number (VIN) or any other unique data that enables identification or tracking of a vehicle or individual involved is separated from the EDR/DSSAD data.

The repository coordinator 25 may store the first data set to which link data is added (that is, link data and EDR/DSSAD data) in EDR/DSSAD databases. The repository coordinator 25 may store the second data set to which the salt is added (that is, salt and VII) in the VII database.

The link data may be a pseudonym identifier generated based at least in part on the VII. In some embodiments, the pseudonym identifier may be generated by applying a one-way hash function to the VII. The one-way hash function makes it impossible to extract the VII or other useful information from the pseudonym identifier. Preferably, the pseudonym identifier may be generated by applying a one-way hash function to the concatenation of the VII and a salt. The salt used to generate the pseudonym identifier may be stored in the VII database along with the related VII. Herein, a one-way hash function has been described as an example, but other types of cryptographical algorithms for generating pseudonymous identifiers may be used.

In some embodiments, the link data may be a de-identified version of the vehicle identification number (VIN). As described above, the VIN is a 17-digit unique identifier composed of numbers and letters assigned to individual vehicles by vehicle manufacturers. The de-identified version of the VIN may be generated by cryptographically de-identifying at least some digits of an original VIN including a production serial number.

As will be explained below, each digit of a VIN has a specific purpose.

FIG. 7 is a diagram for explaining details of a vehicle identification number (VIN).

The first three digits of the VIN, which are known as a world manufacturer identifier (WMI) or a WMI code, provides information on a manufacturer of a vehicle and a geographical location where the vehicle was manufactured.

The first digit of the VIN represents a country in which the vehicle is manufactured. This digit may be a letter or a numeral. For example, "1," "4," or "5" in the first digit represents the country of origin as America. "2" represents Canada, "3" represents Mexico, "6" represents Australia, "A" represents South Africa, "J" represents Japan, "L" represents China, and "K" represents Korea.

The second digit of the VIN represents a vehicle manufacturer but should be paired with the first digit (represents a manufacturing country) to accurately decode the manufacturer. For example, a VIN beginning with "1C" represents a vehicle manufactured by Chrysler in America, and a VIN beginning with "AC" represents a vehicle manufactured by Hyundai in South Africa.

The third digit represents a vehicle type or a manufacturing division. In a VIN beginning with "WV1," "W" represents Germany as a manufacturing country, and "V" represents Volkswagen as a manufacturer. "1" represents a commercial vehicle of Volkswagen. The VINs of Volkswagen buses or vans begin with "WV2," and the VINs of Volkswagen trucks begin with "WV3."

The fourth to eighth digits of the VIN constitute a vehicle descriptor section (VDS), and represent vehicle features such as vehicle body style, an engine type, a model, and a series. Each manufacturer uses these five-digit fields in its own way.

The ninth digit is a check numeral for identifying an invalid VIN. This numeral is determined from numeric values of the first eight digits and the last eight digits according to a mathematical formula.

The tenth to seventeenth digits of the VIN are known as a vehicle identifier section (VIS). These provide a much more detailed description of the specific vehicle.

The tenth digit represents a model year of the vehicle. Letters from B to Y correspond to models between the years 1981 and 2000. VINs do not use I, O, Q, U, or Z. Between the years 2001 and 2009, numerals from 1 to 9 were used instead of letters. The English alphabet is used for the years 2010 to 2030 beginning with A. Model years of 2000 or later are as follows: Y=2000, 1=2001, 2=2002, 3=2003, ..., 9=2009, A=2010, B=2011, C=2012, ..., K=2019, and L=2020.

The eleventh digit represents an assembly plant in which the vehicle was assembled. Each VM has its own set of plant codes. The last six digits (from the twelfth digit to the seventeenth digit) represent a production serial number of the vehicle.

The repository coordinator 25 parses the VIN to extract a serial number, and applies a one-way hash function to the concatenation of the salt and the serial number to generate a hash value. The repository coordinator 25 may generate a de-identified version of the VIN by replacing the serial number of the VIN with the generated hash value. In other words, the de-identified version of the VIN may have a masked production serial number.

FIG. 8 illustrates an example of a de-identified version of a VIN. In the de-identified version of a VIN, digits other than a production serial number are plain text and thus allow meaningful statistical analysis on EDR data collected from multiple vehicles. For example, it is possible to analyze EDR data generated from vehicles of "2018 *Avante* model produced in North America."

In the case of a model with a very small production number, information, such as model, series, and model year of a vehicle, may enable tracking of the vehicle or a related owner. Accordingly, in the case of such a model, a process similar to the de-identification process performed on a production serial number may be further performed on at least some of the tenth to seventeenth digits of a VIN, which correspond to a VIS, and the fourth to eighth digits of the VIN, which correspond to a VDS.

Link data (in particular, pseudonymous identifiers) itself does not include any meaningful information that identifies a vehicle or individual, but the link data may be cryptographically reconstructed based on the vehicle identification information (VII) and salt stored in the VII database. Accordingly, the relationship between the VII and the EDR/DSSAD data may be tracked from the VII database to the EDR/DSSAD databases, but tracking is impossible in the reverse direction. It is noted that, in some embodiments, an operator of EDR/DSSAD databases may be a service provider independent of the operator of other functional elements of the cloud storage system 20 including the VII database. In such embodiments, as long as the VII database is securely managed, such independent service providers may use or distribute EDR/DSSAD data with little risk to the privacy of a vehicle owner.

Further, by deleting the vehicle identification information or salt used to reconstruct the link data from the VII database, the association between the vehicle identification information and related EDR/DSSAD data may be removed. When it is required to remove an association between the vehicle identification information and the EDR/DSSAD data, the repository coordinator 25 maintains the EDR/DSSAD data in the related databases, but may delete the vehicle identification information or salt from the VII database. This may be useful when the operating entities of the VII database and the EDR/DSSAD databases are different from each other.

Referring to FIG. 9, an exemplary method for the cloud storage system 20 to inquire and provide EDR/DSSAD data for a specific vehicle is described.

Upon receiving a data request message requesting EDR/DSSAD data for a specific vehicle through the security channel, the cloud interface 27 may authenticate whether a requester is a vehicle owner who is the data subject or a third party with legitimate authority. The data request message may include authentication information and VII of a specific vehicle. When the authentication is successful, the repository coordinator 25 may acquire the salt stored together with the VII of a vehicle by inquiring the VII database. The repository coordinator 25 may reconstruct the link data from VII and the salt. The repository coordinator 25 may retrieve EDR data and DSSAD data from the EDR database and the DSSAD database, respectively, using the link data. The repository coordinator may log data requests and consequent inquiry tasks, and reply the EDR data and DSSAD data to a requestor.

Most privacy-related regulations, such as GDPR, ensure that data subjects have the right to control the use, management and disposition of data. To this end, the cloud storage system 20 may establish a privacy policy including a set of privacy rules to be applied for a procedure for collecting and managing EDR/DSSAD data from each vehicle.

The rule/policy manager 23 may operate a web server that provides a graphical user interface through which a vehicle owner can select one or more privacy options to apply for EDR/DSSAD data. The rule/policy manager 23 of the cloud storage system 20 may receive, from the vehicle owner, a selection of privacy options for the EDR/DSSAD data of the vehicle. Selection of the privacy options may be made when the vehicle owner subscribes to the cloud storage system 20 or registers his/her vehicle, or at some point after registration. Exemplary privacy options selectable are listed.
- Opt-out: an option for the vehicle owner to specify one or more data elements that are not allowed to be collected from the owner's vehicle.
- Opt-in: an option for the vehicle owner to specify one or more data elements that are permitted to be collected from the owner's vehicle.
- Restricted use: an option for the vehicle owner to limit the purposes for which collected data is permitted to be used.
- De-identification: an option for the vehicle owner to grant a permission to collect data from the owner's vehicle, but to have any association with the vehicle or individual removed first to permit use of the data by a third party.

The rule/policy manager 23 may generate a set of privacy rules applicable to the EDR/DSSAD data of the vehicle in accordance with the selection (or private options) made by a vehicle owner, and store the generated set of privacy rules in the privacy policy-related database. The set of privacy rules may be defined in a markup language such as Extensible Markup Language (XML).

Even after subscribing to the cloud storage system 20, a vehicle owner has the right to request the cloud storage system to delete personal data (VII/EDR/DSSAD data), and in response to the request, the cloud storage system 20 undertakes the obligation to delete personal data without undue delay.

Referring to FIG. 10, an exemplary method in which the cloud storage system 20 deletes VII/EDR/DSSAD data per the request of a vehicle owner is described.

Upon receiving a deletion request message requesting deletion of vehicle-generated data through the security channel, the cloud interface 27 may authenticate whether a requestor is a vehicle owner who is the data subject. The deletion request message may include authentication information and the VII of a related vehicle. When the authentication is successful, the repository coordinator 25 may acquire the salt stored together with the VII of the vehicle by inquiring the VII database. The repository coordinator 25 may reconstruct the link data from the VII and the salt. The repository coordinator 25 may retrieve EDR data and DSSAD data from the EDR database and the DSSAD database using the link data, respectively, and delete EDR/DSSAD data corresponding to the link data. The repository coordinator may record a log for a deletion request and a corresponding deletion task, and respond to a requester with a result of the execution.

The request for deletion from a vehicle owner may further include selection of data to be deleted from among VII and EDR/DSSAD data. At the selection of the vehicle owner, the cloud storage system 20 may selectively delete VII and EDR/DSSAD data from the databases.

When only the VII is deleted, the cloud storage system 20 may manage the related EDR/DSSAD data under a relatively mitigated security level. For example, the cloud storage system 20 may retain EDR/DSSAD data with VII deleted, use the same for research purposes, or provide the same to third parties, without restrictions on the purpose or period of use set by the vehicle owner. That is, the EDR/DSSAD data from which VII has been deleted, the security level of a right to use may be mitigated relatively.

In some embodiments, when a validity period set by a vehicle owner expires, the cloud storage system 20 may maintain the related EDR/DSSAD data in the EDR/DSSAD databases, but may delete the related VII or salt from the VII database. Accordingly, even after the validity period set by the vehicle owner has expired, the EDR/DSSAD data may be used for statistical analysis with no association with the VII data. Even in such a case, upon receiving an explicit deletion request from the vehicle owner, the cloud storage system 20 also needs to delete the EDR/DSSAD data. In some other embodiments, when the usage period set by the vehicle owner expires, the cloud storage system may selectively delete only the EDR/DSSAD data whose usage period has expired while retaining the related VII data.

It should be understood that the illustrative embodiments described above may be implemented in many different ways. In some embodiments, the various methods, devices, servers, (sub)system described in this disclosure may be implemented by at least one general purpose computer having processors, memories, disks or other mass storage, communication interfaces, input/output (I/O) devices and other peripheral devices. The general purpose computer may serve as an apparatus, server, or system adapted to load software instructions on the processor, and then execute the instructions to perform the functions described in this disclosure, and thereby perform the methods described above.

The various methods described in this disclosure may be implemented with instructions stored on a non-transitory recording medium, which can be read and executed by one or more processors. Non-transitory recording media includes, for example, all types of recording device in which data is stored in a form readable by a computer system. For example, non-transitory recording media include storage media such as erasable programmable read-only memory (EPROM), electrically erasable programmable read-only memory (EEPROM), flash drives, optical drives, magnetic hard drives, and solid state drives (SSDs).

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the present embodiments is not limited by the illustrations. Accordingly, one of ordinary skill would understand the scope of the claimed invention is not to be limited by the above explicitly described embodiments but by the claims and equivalents thereof.

### CROSS-REFERENCE TO RELATED APPLICATION

The present application is based on, and claims priority from, Korean Patent Application Number 10-2020-0090449, filed July 21, 2020, and Korean Patent Application Number 10-2021-0060237, filed May 10, 2021, the disclosures of which are incorporated by reference herein in its entirety.

## Claims

1. A data recording system of a vehicle, the system including:
a telecommunication device configured to enable communication between the vehicle and a remote server;
a first data recorder configured to record a plurality of interaction data representing timestamped interactions that occur between an autonomous driving system of the vehicle and a driver while driving; and
a second data recorder configured to record event data representing a state of the vehicle for a predetermined time before and after a predefined event occurs,
wherein the telecommunication device is further configured to upload the plurality of interaction data to the remote server according to a predefined schedule, and in response to an occurrence of the event, upload main interaction data that is at least one interaction data recorded in proximity to an occurrence time point of the event to the remote server together with the event data or subsequent to the event data.

2. The system of claim 1, wherein the main interaction data is used to identify a subject who was controlling the vehicle at the time the event occurred.

3. The system of claim 1, wherein each of the plurality of interaction data is timestamped data indicating a type of interaction.

4. The system of claim 1, wherein the type of interaction includes changing a state of the autonomous driving system, starting and ending Minimal Risk Maneuver (MRM) by the autonomous driving system, and taking over control of a driving task to the driver.

5. The system of claim 4, wherein the type of interaction further includes an occurrence of an event that triggers recording of the first data recorder and an occurrence of a minor event that does not trigger recording of the first data recorder.

6. The system of claim 1, wherein the plurality of interaction data is expressed in a data format including a type field in which a type flag indicating a type of interaction is defined, a cause field in which data indicating a cause of the interaction is defined, a date field in which data indicating a date when the interaction occurred is defined, and a timestamp field in which data indicating a time when the interaction occurred is defined.

7. A method performed by a data recording system of a vehicle comprising a first data recorder and a second data recorder, the method including:
recording, by the first data recorder, a plurality of interaction data indicating timestamped interactions that occur between an autonomous driving system of the vehicle and a driver while driving;
uploading the plurality of interaction data to a remote server according to a predefined schedule;
recording, by the second data recorder, event data indicating a vehicle state for a predetermined time before and after a predefined event occurs, in response to an occurrence of the predefined event;
identifying main interaction data that is at least one interaction data recorded in proximity to an occurrence time point of the event; and
uploading the main interaction data to the remote server together with the event data or subsequent to the event data.

8. The method of claim 7, wherein the main interaction data is used to identify a subject that was controlling the vehicle at the time the event occurred.

9. The method of claim 7, wherein each of the plurality of interaction data is timestamped data indicating a type of interaction.

10. The method of claim 7, wherein the type of interaction includes changing a state of the autonomous driving system, starting and ending Minimal Risk Maneuver (MRM) by the autonomous driving system, and taking over control of a driving task to the driver.

11. The method of claim 10, wherein the type of interaction further includes an occurrence of an event that triggers recording of the first data recorder and an occurrence of a minor event that does not trigger recording of the first data recorder.

12. The method of claim 7, wherein the plurality of interaction data is expressed in a data format including a type field in which a type flag indicating a type of interaction is defined, a cause field in which data indicating a cause of the interaction is defined, a date field in which data indicating a date when the interaction occurred is defined, and a timestamp field in which data indicating a time when the interaction occurred is defined.
